# EUROPÄISCHE PATENTSCHRIFT

(11) **EP 1 648 958 B1**
(45) Veröffentlichungstag und Bekanntmachung des Hinweises auf die Patenterteilung: **01.08.2007**
(21) Anmeldenummer: 04766029.5
(22) Anmeldetag: 03.06.2004
(51) Int. Cl.: C08K 3/00, C08K 3/32, C08K 3/28, C08K 5/098

(54) **PULVERFÖRMIGE KOMPOSITION VON POLYMER UND AMMONIUMPOLYPHOSPHATHALTIGEM FLAMMSCHUTZMITTEL, VERFAHREN ZU DESSEN HERSTELLUNG UND FORMKÖRPER, HERGESTELLT AUS DIESEM PULVER**
POWDERY COMPOSITION OF A POLYMER AND A FLAMEPROOFING AGENT CONTAINING AMMONIUM POLYPHOSPHATE, METHOD FOR THE PRODUCTION THEREOF, AND MOULDED BODY PRODUCED FROM SAID POWDER
COMPOSITION PULVERULENTE D'UN POLYMERE ET D'UN AGENT IGNIFUGE CONTENANT DU POLYPHOSPHATE D'AMMONIUM, PROCEDE DE PRODUCTION CORRESPONDANT ET CORPS MOULES OBTENUS A PARTIR DE CETTE POUDRE

(30) Priorität: 25.07.2003 DE 10333936; 08.01.2004 DE 102004001324
(43) Veröffentlichungstag der Anmeldung: 26.04.2006
(73) Patentinhaber: Degussa GmbH, 40474 Düsseldorf (DE)
(72) Erfinder: MONSHEIMER, Sylvia, 45721 Haltern am See (DE); GREBE, Maik, 44805 Bochum (DE); BAUMANN, Franz-Erich, 48249 Dülmen (DE)
(86) Internationale Anmeldenummer: PCT/EP2004/051009
(87) Internationale Veröffentlichungsnummer: WO 2005/010087

(56) Entgegenhaltungen:
- EP-A- 0 686 661
- EP-A- 1 179 568
- US-A- 6 136 948
- US-B1- 6 245 281

## Beschreibung

Die Erfindung betrifft ein Polymerpulver, welches zumindest ein Polymer und zumindest ein ammoniumpolyphosphathaltiges Flammschutzmittel aufweist, ein Verfahren zur Herstellung dieses Pulvers sowie Formkörper, hergestellt durch schichtweise Auftragung und Verschmelzung dieses Pulvers.

Die zügige Bereitstellung von Prototypen ist eine in der jüngsten Zeit häufig gestellte Aufgabe. Dabei sind aufgrund ihrer Flexibilität besonders die Verfahren im Fokus, die ein pulverförmiges Material schichtweise auftragen und selektiv schmelzen oder verbinden.

Ein Verfahren, welches besonders gut für den Zweck des Rapid Prototypings geeignet ist, ist das selektive Laser-Sintern. Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel verlaufen ineinander und erstarren schnell wieder zu einer festen Masse. Durch wiederholtes Belichten von immer neu aufgebrachten Schichten können mit diesem Verfahren dreidimensionale Körper auch komplexer Geometrie einfach und schnell hergestellt werden.

Das Verfahren des Laser-Sinterns (Rapid Prototyping) zur Darstellung von Formkörpern aus pulverförmigen Polymeren wird ausführlich in den Schriften US 6,136,948 und WO 96/06881 (beide DTM Corporation) beschrieben. Eine Vielzahl von Polymeren und Copolymeren kann für diese Anwendung eingesetzt werden, wie z.B. Polyacetat, Polypropylen, Polyethylen, lonomere und Polyamid.

In der Praxis hat sich beim Laser-Sintern vor allem Polyamid 12-Pulver (PA 12) für die Herstellung von Formkörpern, insbesondere von technischen Bauteilen bewährt. Die aus PA-12 Pulver gefertigten Teile genügen den hohen Anforderungen, die bezüglich der mechanischen Beanspruchung gestellt werden und kommen damit in ihren Eigenschaften besonders nahe an die späteren Serienteile, die durch Extrusion oder Spritzgießen erstellt werden.

Gut geeignet ist dabei ein PA 12-Pulver mit einer mittleren Korngröße (d₅₀) von 50 bis 150 µm, wie man es beispielsweise gemäß DE 197 08 946 oder auch DE 44 21 454 erhält. Vorzugsweise wird dabei ein Polyamid 12 Pulver mit einer Schmelztemperatur von 185 bis189 °C, einer Schmelzenthalpie von 112 ± 17 J/g und einer Erstarrungstemperatur von 138 bis 143 °C, wie es in EP 0 911 142 beschrieben wird, verwendet.

Andere gut geeignete Verfahren sind das SIV-Verfahren, wie es in WO 01/38061 oder EP 1015 214 beschrieben wird. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren, welches große Akzeptanz im Markt gefunden hat, ist das 3D-Printing nach EP 0 431 924; dort entstehen die Formkörper durch Aushärten eines selektiv auf die Pulverschicht aufgetragenen Binders. Ein weiteres Verfahren ist in DE 103 11 438 beschrieben. Bei diesem wird die zum Verschmelzen benötigte Energie durch einen Mikrowellengenerator eingebracht und die Selektivität wird durch Auftragen eines Suszeptors erreicht.

Für die genannten Rapid-Prototyping- bzw. Rapid-Manufacturing-Verfahren (RP- oder RM-Verfahren) können pulverförmige Substrate, insbesondere Polymere oder Copolymere, vorzugsweise ausgewählt aus Polyester, Polyvinylchlorid, Polyacetal, Polypropylen, Polyethylen, Polystyrol, Polycarbonat, Poly-(N-methylmethacrylimide) (PMMI), Polymethylmethacrylat (PMMA), lonomer, Polyamid, Copolyester, Copolyamide, Terpolymere, Acrylnitril-Butadien-Styrol-Copolymere (ABS) oder Gemische davon eingesetzt werden.

Trotz der bereits guten Eigenschaften der bekannten Polymerpulver weisen mit solchen Pulvern hergestellte Formkörper noch immer einige Nachteile auf. Nachteilig bei den derzeit eingesetzten Polymerpulvern sind insbesondere ihre leichte Entflamm- und Brennbarkeit. Das verhindert derzeit den Einsatz oben beschriebener Verfahren für den Einsatz in Kleinserien beispielsweise im Flugzeugbau.
Aufgabe der vorliegenden Erfindung war es deshalb, ein Polymerpulver bereitzustellen, welches eine schlechtere Entflammbarkeit der daraus mit einem der oben beschriebenen Verfahren hergestellten Teile ermöglicht.

Überraschenderweise wurde nun, wie in den Ansprüchen beschrieben, gefunden, dass sich durch Zugabe von ammoniumpolyphosphathaltigen Flammschutzmitteln zu Polymeren oder Copolymeren pulverförmige Kompositionen (Pulver) herstellen lassen, aus denen sich Formkörper durch ein schichtweise arbeitendes Verfahren, bei dem selektiv Bereiche aufgeschmolzen oder miteinander verbunden werden, produzieren lassen, die deutlich schlechter entflammbar und brennbar sind als Formkörper aus herkömmlichen Polymerpulvern.

Gegenstand der vorliegenden Erfindung ist deshalb eine pulverförmige Zusammensetzung, insbesondere Baupulver bzw. Rapid-Prototyping- und Rapid-Manufacturing-Pulver (RP-/RM-Pulver) für Rapid-Prototyping- oder Rapid-Manufacturing-Anwendungen, zur Verarbeitung in einem Verfahren zum schichtweisen Aufbau von dreidimensionalen Gegenständen, bei dem selektiv Teile des Pulvers miteinander verbunden werden, die dadurch gekennzeichnet ist, dass das Pulver zumindest ein Polymer und zumindest ein Ammoniumpolyphosphat aufweisendes Flammschutzmittel und eine maximale Partikelgröße von ≤ 150 µm aufweist.

Ebenso ist Gegenstand der vorliegenden Erfindung ein Verfahren zur Herstellung von erfindungsgemäßem Pulver (pulverförmiger Komposition), welches dadurch gekennzeichnet ist, dass eine pulverförmige Mischung eines Polymeren und eines Ammoniumpolyphosphat aufweisenden Flammschutzmittels hergestellt wird.

Außerdem ist Gegenstand der vorliegenden Erfindung die Verwendung von erfindungsgemäßem Pulver zur Herstellung von Formkörpern durch schichtweise arbeitende und selektiv das Pulver verbindende Verfahren sowie Formkörper, hergestellt durch ein Verfahren zum schichtweisen Aufbau von dreidimensionalen Gegenständen, bei dem selektiv Teile eines Pulvers miteinander verbunden werden, und welche dadurch gekennzeichnet sind, dass sie zumindest ein Ammoniumpolyphosphat aufweisendes Flammschutzmittel und zumindest ein Polymer aufweisen.

Das erfindungsgemäße Pulver hat den Vorteil, dass aus ihm durch ein wie oben beschriebenes RP- oder RM-Verfahren zum schichtweisen Aufbau von dreidimensionalen Gegenständen, bei dem selektiv Teile des eingesetzten Pulvers miteinander verbunden werden, Formkörper hergestellt werden können, die eine schlechtere Brennbarkeit und Entflammbarkeit aufweisen. Gleichzeitig werden die mechanischen Eigenschaften der Formkörper im wesentlichen beibehalten. Damit eröffnen sich Anwendungsbereiche, die bisher aufgrund der schlechten Einstufung, was die Brennbarkeit angeht, nicht möglich waren. Besonders überraschend war, dass bei Einhaltung von Mindestgehalten an Ammoniumpolyphosphat aufweisendem Flammschutzmittel in den Pulvern, sogar eine Einstufung des fertigen Formkörpers in die Stufe V0 gemäß UL94 (Underwriters Laboratories Inc, Testverfahren 94V) erreicht werden kann.

Außerdem konnte überraschenderweise festgestellt werden, dass Formkörper, hergestellt aus dem erfindungsgemäßen Pulver, gleichbleibend gute oder sogar verbesserte mechanische Eigenschaften aufweisen, insbesondere hinsichtlich erhöhtem Elastizitätsmodul, Zugfestigkeit und Dichte. Auch das Aussehen der Formkörper zeigt eine gute Qualität, beispielsweise eine gute Maßhaltigkeit und Oberflächengüte.

Das erfindungsgemäße Pulver sowie ein Verfahren zu dessen Herstellung wird nachfolgend beschrieben, ohne dass die Erfindung darauf beschränkt sein soll.

Das erfindungsgemäße Baupulver bzw. die erfindungsgemäße pulverförmige Zusammensetzung zur Verarbeitung in einem Verfahren zum schichtweisen Aufbau von dreidimensionalen Gegenständen, bei dem selektiv Teile des Pulvers miteinander verbunden werden, zeichnet sich dadurch aus, dass das Pulver zumindest ein Polymer und zumindest ein Ammoniumpolyphosphat aufweisendes Flammschutzmittel und eine maximale Partikelgröße von ≤ 150 µm, vorzugsweise von 20 bis 100 µm aufweist. Das Pulver wird in diesen Verfahren vorzugsweise durch Energieeintrag, besonders bevorzugt durch Wärmeeinwirkung, verbunden, wobei die Partikel untereinander durch verschmelzen oder versintern verbunden werden. Ebenso ist das Pulver einsetzbar in Verfahren, bei denen die Partikel durch chemische Reaktion untereinander oder mit einem Binder oder durch physikalische Maßnahmen, bevorzugt Trocknung oder Verklebung verbunden werden. Details zu den einzelnen Verfahren können den oben genannten Schriften entnommen werden.

Das Polymer und auch das Flammschutzmittel können in dem erfindungsgemäßen Pulver als Mischung der jeweiligen Pulver vorliegen, oder als Pulver, in denen die überwiegende Anzahl der Körner oder jedes Korn sowohl Polymer als auch Flammschutzmittel aufweist. Bei solchen Pulvern kann das Flammschutzmittel homogen in den Partikeln verteilt sein oder aber in der Mitte des Partikels oder an der Oberfläche des Partikels angereichert sein.

Das Pulver weist als Polymer vorzugsweise ein Homo- oder Copolymer ausgewählt aus Polyester, Polyvinylchlorid, Polyacetal, Polypropylen, Polyethylen, Polystyrol, Polycarbonat, Poly-(N-methylmethacrylimide) (PMMI), Polymethylmethacrylat (PMMA), lonomer, Polyamid, Copolyester, Copolyamide, Terpolymere, Acrylnitril-Butadien-Styrol-Copolymere (ABS) oder Gemischen davon aus. Besonders bevorzugt weist das erfindungsgemäße Pulver ein Polymer auf, welches eine Schmelztemperatur von 50 bis 350 °C, vorzugsweise von 70 bis 200 °C aufweist.

Die im erfindungsgemäßen Pulver vorhandenen Polymere können insbesondere durch Vermahlen, Fällen und/oder anionische Polymerisation oder einer Kombination daraus oder durch anschließende Fraktionierung hergestellt werden.

Das erfindungsgemäße Pulver weist vorzugsweise, insbesondere wenn das Pulver zum selektiven Laser-Sintern eingesetzt werden soll, zumindest ein Polyamid auf. Als Polyamid weist das erfindungsgemäße Pulver vorzugsweise ein Polyamid auf, welches pro Carbonamid-Gruppe mindestens 8 Kohlenstoffatome aufweist. Bevorzugt weist das erfindungsgemäße Pulver mindestens ein Polyamid auf, welches 9 oder mehr Kohlenstoffatome pro Carbonamid-Gruppe aufweist. Ganz besonders bevorzugt weist das Pulver zumindest ein Polyamid, ausgewählt aus Polyamid 612 (PA 612), Polyamid 11 (PA 11) und Polyamid 12 (PA 12) oder Copolyamide, basierend auf den vorgenannten Polyamiden, auf. Das erfindungsgemäße Pulver weist vorzugsweise ein ungeregeltes Polyamid auf.

Für das Lasersintern ist insbesondere ein Polyamid 12 Sinterpulver geeignet, welches eine Schmelztemperatur von 185 bis 189 °C, vorzugsweise von 186 bis 188 °C, eine Schmelzenthalpie von 112 ± 17 J/g, vorzugsweise von 100 bis 125 J/g und eine Erstarrungstemperatur von 133 bis 148 °C, vorzugsweise von 139 bis 143 °C aufweist. Der Prozess für die Herstellung für die den erfindungsgemäßen Sinterpulvern zugrunde liegenden Polyamidpulver ist allgemein bekannt und kann im Fall von PA 12 z.B. den Schriften DE 29 06 647, DE 35 10 687, DE 35 10 691 und DE 44 21 454, deren Inhalt zum Offenbarungsgehalt der vorliegenden Erfindung gehören sollen, entnommen werden. Das benötigte Polyamidgranulat kann von verschiedenen Herstellern bezogen werden, beispielsweise wird Polyamid 12 Granulat von der Degussa AG unter dem Handelsnamen VESTAMID angeboten.

Ebenfalls besonders gut geeignet ist Polyamid 12, welches eine Schmelztemperatur von 185 bis 189 °C, vorzugsweise von 186 bis 188 °C, eine Schmelzenthalpie von 120 ± 17 J/g, vorzugsweise von 110 bis 130 J/g und eine Erstarrungstemperatur von 130 bis 140 °C, vorzugsweise von 135 bis 138 °C und vorzugsweise auch eine Kristallisationstemperatur nach einer Alterung von 135 bis 140 °C aufweist. Die Ermittlung dieser Messwerte erfolgte wie in EP 0 911 142 beschrieben mittels DSC.

Für die nicht mit einem Laser arbeitenden Verfahren zur Herstellung von dreidimensionalen Objekten ist ein Pulver, welches ein Copolymer, insbesondere ein Copolyamid aufweist, besonders gut geeignet.

Das erfindungsgemäße Pulver weist bezogen auf die Summe der im Pulver vorhandenen Polymere vorzugsweise von 5 bis 50 Massen-% an einem Ammoniumpolyphosphat aufweisenden Flammschutzmittel, bevorzugt von 10 bis 40 Massen-% eines ammoniumpolyphosphathaltigen Flammschutzmittels, besonders bevorzugt von 20 bis 35 Massen-% eines ammoniumpolyphosphathaltigen Flammschutzmittels und ganz besonders bevorzugt von 23 bis 34 Massen-% eines ammoniumpolyphosphathaltigen Flammschutzmittels, auf Die angegebenen Bereiche beziehen sich dabei auf den Gesamtgehalt eines ammoniumpolyphosphathaltigen Flammschutzmittels im Pulver, wobei mit Pulver die gesamte aus Komponenten bestehende Menge gemeint ist.

Das erfindungsgemäße Pulver kann eine Mischung eines ammoniumpolyphosphathaltigen Flammschutzmittels und Polymerpartikeln aufweisen oder aber Polymerpartikel bzw. -pulver, welche eingearbeitetes ammoniumpolyphosphathaltiges Flammschutzmittel aufweisen. Bei einem Anteil eines ammoniumpolyphosphathaltigen Flammschutzmittels von unter 5 Massen-% bezogen auf die gesamte aus Komponenten bestehende Menge nimmt der gewünschte Effekt der Schwereentflammbarkeit und Nichtbrennbarkeit deutlich ab. Bei einem Anteil eines ammoniumpolyphosphathaltigen Flammschutzmittels von über 50 Massen-% bezogen auf die gesamte aus Komponenten bestehende Menge verschlechtern sich die mechanischen Eigenschaften wie z.B. die Reißdehnung der aus solchen Pulvern hergestellten Formkörper deutlich.

Weist das Pulver eine Mischung von Polymerpartikeln und einem ammoniumpolyphosphathaltigen Flammschutzmittel auf, so weisen die Polymerpartikel eine maximale Partikelgröße von 150 µm, vorzugsweise eine mittlere Partikelgröße von 20 bis 100 µm und besonders bevorzugt von 45 bis 80 µm auf. Das ammoniumpolyphosphathaltige Flammschutzmittel weist vorzugsweise eine Partikelgröße auf, die die mittlere Korngröße d₅₀ der Polymerpartikel bzw. -pulver um mindestens 20 %, vorzugsweise um mehr als 50 % und ganz besonders bevorzugt um mehr als 70 % unterschreiten. Insbesondere weist die Flammschutzkomponente eine mittlere Partikelgröße von 1 bis 50 µm, bevorzugt von 5 bis 15 µm auf. Durch die geringe Partikelgröße kommt es zu einer guten Verteilung des pulverförmigen Flammschutzmittels in dem pulverförmigen Polymerpulver.

Die im erfindungsgemäßen Pulver enthaltenen Flammschutzmittel weisen Ammoniumpolyphosphat als Hauptkomponente auf. Der Phosphorgehalt im Ammoniumpolyphosphat beträgt dabei bevorzugt von 10 bis 35 Massen-%, bevorzugt 15 bis 32 Massen-% und ganz besonders bevorzugt 20 bis 32 Massen%. Das Flammschutzmittel ist vorzugsweise halogenfrei. Es kann jedoch Synergisten aufweisen, beispielsweise Kohlenstoffbildner wie Polyalkohole oder Pentaerythrit, und/oder beispielsweise eine intumeszierende (aufschäumende) Komponente wie Melamin. Außerdem kann Schwefel in der Komposition enthalten sein. Das Flammschutzmittel kann, wenn es als Pulver vorliegt, ferner ein Coating, zur Verträglichkeitsvermittlung oder um die Feuchtigkeitsanfälligkeit des Ammoniumpolyphosphates zu reduzieren, aufweisen. Solche gecoateten Flammschutzmittel sind beispielsweise bei Budenheim Iberica unter dem Namen Budit erhältlich.

Kommerziell erhältliche Beispiele für Ammoniumpolyphosphat aufweisende Flammschutzmittel im allgemeinen sind Budit 3076 DCD bzw. Budit 3076 DCD-2000 der Firma Budenheim Iberica, oder Produkte der Exolit AP-Reihe, beispielsweise Exolit AP 750 oder Exolit AP 422 von der Firma Clariant.

Erfindungsgemäßes Pulver kann außerdem zumindest einen Hilfsstoff, zumindest einen Füllstoff und/oder zumindest ein Pigment aufweisen. Solche Hilfsstoffe können z.B. Rieselhilfsmittel, wie z.B. pyrogenes Siliziumdioxid oder auch gefällte Kieselsäure sein. Pyrogenes Siliziumdioxid (pyrogene Kieselsäure) wird zum Beispiel unter dem Produktnamen Aerosil^{®}, mit unterschiedlichen Spezifikationen, durch die Degussa AG angeboten. Insbesondere können die Rieselhilfsmittel hydrophobe Rieselhilfen sein. Vorzugsweise weist erfindungsgemäßes Pulver weniger als 3 Massen-%, vorzugsweise von 0,001 bis 2 Massen-% und ganz besonders bevorzugt von 0,05 bis 1 Massen-% solcher Hilfsstoffe bezogen auf Gesamtsumme der Komponenten, also der Summe aus Polymeren und Flammschutzmittel auf. Die Füllstoffe können z.B. Glas-, Metall-, insbesondere Aluminium- oder Keramikpartikel, wie z.B. massive oder hohle Glaskugeln, Stahlkugeln, Aluminiumkugeln oder Metallgrieß oder auch Buntpigmente, wie z.B. Übergangsmetalloxide sein.

Die Füllstoffpartikel weisen dabei vorzugsweise eine kleinere oder ungefähr gleich große mittlere Korngröße wie die Partikel der Polymere auf. Vorzugsweise sollte die mittlere Korngröße d₅₀ der Füllstoffe die mittlere Korngröße d₅₀ der Polymere um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Bauhöhe bzw. Schichtdicke in der jeweils verwendeten schichtweise arbeitenden Apparatur. Vorzugsweise weist erfindungsgemäßes Pulver weniger als 70 Massen-%, bevorzugt von 0,001 bis 60 Massen-%, besonders bevorzugt von 0,05 bis 50 Massen-% und ganz besonders bevorzugt von 0,5 bis 25 Massen-% solcher Füllstoffe bezogen auf die Gesamtsumme der Komponenten auf, so dass der Volumenanteil der Polymere in jedem Fall größer 50 % beträgt.

Beim Überschreiten der angegebenen Höchstgrenzen für Hilfs- und/oder Füllstoffe kann es, je nach eingesetztem Füll- oder Hilfsstoff zu deutlichen Verschlechterungen der mechanischen Eigenschaften von Formkörpern kommen, die mittels solcher Pulver hergestellt wurden.

Die Herstellung der erfindungsgemäßen Pulver ist einfach möglich und erfolgt bevorzugt gemäß dem erfindungsgemäßen Verfahren zur Herstellung von erfindungsgemäßem Pulver, welches sich dadurch auszeichnet, dass zumindest ein Polymer mit zumindest einem Ammoniumpolyphosphat aufweisendem Flammschutzmittel vermischt wird. Das Mischen kann trocken im Dry Blend erfolgen. Vorzugsweise wird ein z.B. durch Umfällung und/oder Vermahlung erhaltenes Polymerpulver, welches auch noch anschließend fraktioniert werden kann, mit dem Ammoniumpolyphosphat aufweisenden Flammschutzmittel vermischt. Dabei kann es von Vorteil sein, das pulverförmige Flammschutzmittel zunächst allein oder aber auch die fertige Mischung mit einer Rieselhilfe zu versehen, beispielsweise aus der Aerosil-R-Reihe von Degussa, z. B. Aerosil R972 oder R812. In einer anderen Verfahrensvariante kann das Ammoniumpolyphosphat aufweisende Flammschutzmittel in eine Schmelze von zumindest einem Polymer eincompoundiert werden und das erhaltene Gemisch durch Vermahlung zu Pulver verarbeitet werden. Die Verarbeitung von auf Ammoniumpolyphosphat basierenden Flammschutzmitteln beim Compoundieren wird beispielsweise in Plastics Additives & Compounding, April 2002, Elsevier Advanced Technology, Seite 28 bis 33 beschrieben.

Eine feinteilige Vermischung kann in der einfachsten Ausführungsart des erfindungsgemäßen Verfahrens beispielsweise durch Aufmischen fein gepulverten Flammschutzmittels auf das trockene Pulver in schnelllaufenden mechanischen Mischern erfolgen.

Das Pulver kann bei einer dieser ersten Varianten des erfindungsgemäßen Verfahrens ein bereits für die schichtweise arbeitenden Rapid-Prototyping Verfahren geeignetes Polymerpulver sein, dem einfach feinteilige Partikel des Flammschutzmittels zugemischt werden. Die Partikel weisen dabei vorzugsweise eine kleinere bis maximal ungefähr gleich große mittlere Korngröße wie die Partikel der Polymere auf. Vorzugsweise sollte die mittlere Korngröße d₅₀ der Flammschutzpartikel die mittlere Korngröße d₅₀ der Polymerpulver um mehr als 20 %, vorzugsweise um mehr als 50 % und ganz besonders bevorzugt um mehr als 70 % unterschreiten. Die Korngröße ist nach oben hin insbesondere limitiert durch die zulässige Bauhöhe bzw. Schichtdicke in der Rapid-Prototyping-Anlage.

Es ist ebenso möglich, herkömmliche Polymerpulver mit erfindungsgemäßen Pulvern zu mischen. Auf diese Weise lassen sich Pulver mit einer optimalen Kombination von mechanischen und flammhemmenden Eigenschaften herstellen. Das Verfahren zur Herstellung solcher Mischungen kann z.B. DE 34 41 708 entnommen werden.

In einer weiteren Verfahrensvariante wird das Flammschutzmittel mit einem, vorzugsweise geschmolzenem Polymer durch Eincompoundieren gemischt und das erhaltene flammschutzmittel-haltige Polymer wird durch (Kalt-)-Mahlung und gegebenenfalls Fraktionierung zu erfindungsgemäßen Pulver verarbeitet. Üblicherweise wird bei der Compoundierung ein Granulat erhalten, welches anschließend zu Pulver verarbeitet wird. Diese Umarbeitung kann z.B. durch Vermahlen erfolgen. Die Verfahrensvariante, bei welcher das Flammschutzmittel eincompoundiert wird, hat gegenüber dem reinen Mischungsverfahren den Vorteil, dass eine homogenere Verteilung des Flammschutzmittels in dem Pulver erzielt wird.

Gegebenenfalls kann zur Verbesserung des Rieselverhaltens dem erfindungsgemäßen Pulver eine geeignete Rieselhilfe, wie pyrogenes Aluminiumoxid, pyrogenes Siliziumdioxid oder pyrogenes Titandioxid, dem gefällten oder kaltgemahlenen Pulver äußerlich zugesetzt werden.

Zur Verbesserung des Schmelzeverlaufs bei der Herstellung der Formkörper kann ein Verlaufsmittel wie beispielsweise Metallseifen, bevorzugt Alkali- oder Erdalkalisalze der zugrunde liegenden Alkanmonocarbonsäuren oder Dimersäuren, dem gefällten oder kalt gemahlenen Pulver zugesetzt werden.

Als Flammschutzmittel können handelsübliche Produkte, die beispielsweise bei der Fa. Budenheim Iberica oder Clariant unter dem Handelsnamen Exolit AP^{®} oder Budit^{®} bezogen werden können, bzw. die oben beschriebenen eingesetzt werden.

Die Metallseifen wurden in Mengen von 0,01 bis 30 Gew.%, vorzugsweise 0,5 bis 15 Gew.-%, bezogen auf die Summe der im Pulver vorhandenen Polyamide, eingesetzt. Bevorzugt wurden als Metallseifen die Natrium- oder Calciumsalze der zugrundeliegenden Alkanmonocarbonsäuren oder Dimersäuren eingesetzt. Beispiele für kommerziell verfügbare Produkte sind Licomont NaV oder Licomont CaV der Firma Clariant.

Die Metallseifenpartikel können in die Polyamidpartikel eingearbeitet werden, es können aber auch Mischungen von feinteiligen Metallseifenpartikeln und Polyamidpartikeln vorliegen.

Zur Verbesserung der Verarbeitungsfähigkeit oder zur weiteren Modifikation des Pulvers können diesem anorganische Pigmente, insbesondere Buntpigmente, wie z.B. Übergangsmetalloxide, Stabilisatoren, wie z.B. Phenole, insbesondere sterisch gehinderte Phenole, Verlaufs- und Rieselhilfsmittel, wie z.B. pyrogene Kieselsäuren sowie Füllstoffpartikel zugegeben werden. Vorzugsweise wird, bezogen auf das Gesamtgewicht an Komponenten im Pulver, soviel dieser Stoffe den Pulvern zugegeben, dass die für das erfindungsgemäße Pulver angegeben Konzentrationen für Füll- und/oder Hilfsstoffe eingehalten werden.

Gegenstand der vorliegenden Erfindung ist auch die Verwendung von erfindungsgemäßem Pulver zur Herstellung von Formkörpern in einem schichtweise arbeitenden und selektiv das Pulver verbindenden (Rapid-Prototyping- oder Rapid-Manufacturing-) Verfahren, bei denen erfindungsgemäße Pulver, die Polymer und ein Ammoniumpolyphosphat aufweisendes Flammschutzmittel, vorzugsweise jeweils in partikulärer Form aufweisen, eingesetzt werden.

Insbesondere ist Gegenstand der vorliegenden Erfindung die Verwendung des Pulvers zur Herstellung von Formkörpern durch selektives Lasersintern eines flammschutzmittelhaltigen Fällpulvers auf Basis eines Polyamid 12, welches eine Schmelztemperatur von 185 bis 189 °C, eine Schmelzenthalpie von 112 ± 17 J/g und eine Erstarrungstemperatur von 136 bis 145 °C aufweist und dessen Verwendung in US 6,245,281 beschrieben wird.

Die Laser-Sinter-Verfahren sind hinlänglich bekannt und beruhen auf dem selektiven Sintern von Polymerpartikeln, wobei Schichten von Polymerpartikeln kurz einem Laserlicht ausgesetzt werden und so die Polymerpartikel, die dem Laserlicht ausgesetzt waren, miteinander verbunden werden. Durch die aufeinanderfolgende Versinterung von Schichten von Polymerpartikeln werden dreidimensionale Objekte hergestellt. Einzelheiten zum Verfahren des selektiven Laser-Sinterns sind z.B. den Schriften US 6,136,948 und WO 96/06881 zu entnehmen. Das erfindungsgemäße Pulver kann aber auch in anderen Rapid-Prototyping- oder Rapid-Manufacturing-Verfahren des Standes der Technik, insbesondere in den oben beschriebenen eingesetzt werden. So kann das erfindungsgemäße Pulver insbesondere zur Herstellung von Formkörpern aus Pulvern durch das SLS-Verfahren (selektives Lasersintern), wie in US 6,136,948 oder WO 96/06881 beschrieben, durch das SIV-Verfahren (selektives Inhibieren des Verbindens von Pulver), wie in WO 01/38061 beschrieben, durch 3D-Drucken, wie in EP 0 431 924 beschrieben, oder durch ein Mikrowellenverfahren, wie in DE 103 11 438 beschrieben, verwendet werden. Die zitierten Schriften, insbesondere die dort beschriebenen Verfahren, gehören ausdrücklich zum Offenbarungsgehalt der vorliegenden Beschreibung der Erfindung.

Wegen der Empfindlichkeit der Flammschutzmittel gegenüber Luft ist ein sorgfältiger Umgang bei der Handhabung der erfindungsgemäßen Pulver zu empfehlen. Insbesondere ist der längere Kontakt des erfindungsgemäßen Pulvers mit Luft bzw. Luftfeuchtigkeit zu vermeiden. Durch die Verwendung von hydrophober Rieselhilfe kann die Empfindlichkeit des erfindungsgemäßen Pulvers verringert werden, so dass eine Verringerung des E-Moduls, die gegebenenfalls durch die Zersetzungsprodukte von Ammoniumpolyphosphat bewirkt wird, vermieden werden kann.

Die erfindungsgemäßen Formkörper, hergestellt durch ein Verfahren zum schichtweisen Aufbau von dreidimensionalen Gegenständen, bei dem selektiv Teile eines Pulvers, insbesondere des erfindungsgemäßen Pulvers, miteinander verbunden werden, wie z.B. dem selektiven Laser-Sintern, zeichnen sich dadurch aus, dass sie zumindest ein ammoniumpolyphosphathaltiges Flammschutzmittel und zumindest ein Polymer aufweisen oder aus zumindest einem ammoniumpolyphosphathaltiges Flammschutzmittel und zumindest einem Polymer bestehen. Vorzugsweise weisen die erfindungsgemäßen Formkörper zumindest ein Polyamid auf, welches pro Carbonamid-Gruppe mindestens 8 Kohlenstoffatome aufweist. Ganz besonders bevorzugt weisen erfindungsgemäße Formkörper zumindest ein Polyamid 612, Polyamid 11 und/oder ein Polyamid 12 oder Copolyamide, basierend auf diesen Polyamiden und zumindest ein Ammoniumpolyphosphat aufweisendes Flammschutzmittel auf.

Das in dem erfindungsgemäßen Formkörper vorhandene Flammschutzmittel basiert auf Ammoniumpolyphosphat. Vorzugsweise weist der erfindungsgemäße Formkörper, bezogen auf die Summe der im Formkörper vorhandenen Komponenten, von 5 bis 50 Massen-% an ammoniumpolyphosphathaltigem Flammschutzmittel, bevorzugt von 10 bis 40 Massen-%, besonders bevorzugt von 20 bis 35 Massen-% und ganz besonders bevorzugt von 23 bis 34 Massen-% auf. Maximal beträgt der Anteil an ammoniumpolyphosphathaltigem Flammschutzmittel bevorzugt 50 Massen-% bezogen auf die Summe der im Formkörper vorhandenen Komponenten. Der Formkörper weist, bezogen auf die Summe der vorhandenen Polymere 30 - 35 Gew.-% Ammoniumpolyphosphat aufweisende Flammschutzmittel auf.

Die Formkörper können neben Polymer und Flammschutzmittel außerdem Füllstoffe und/oder Hilfsstoffe und/oder Pigmente, wie z.B. thermische Stabilisatoren und/oder Oxidationsstabilisatoren wie z.B. sterisch gehinderte Phenolderivate aufweisen. Füllstoffe können z.B. Glas-, Keramikpartikel und auch Metallpartikel wie zum Beispiel Eisenkugeln, bzw. entsprechende Hohlkugeln sein. Bevorzugt weisen die erfindungsgemäßen Formkörper Glaspartikel, ganz besonders bevorzugt Glaskugeln auf. Vorzugsweise weisen erfindungsgemäße Formkörper weniger als 3 Gew.-%, vorzugsweise von 0,001 bis 2 Massen-% und ganz besonders bevorzugt von 0,05 bis 1 Massen-% solcher Hilfsstoffe bezogen auf die Summe der vorhandenen Komponenten auf. Ebenso bevorzugt weisen erfindungsgemäße Formkörper weniger als 75 Massen-%, bevorzugt von 0,001 bis 70 Massen-%, besonders bevorzugt von 0,05 bis 50 Massen-% und ganz besonders bevorzugt von 0,5 bis 25 Massen-% solcher Füllstoffe bezogen auf die Summe der vorhandenen Komponenten auf.

Die folgenden Beispiele sollen die erfindungsgemäße pulverförmige Komposition sowie deren Verwendung beschreiben, ohne die Erfindung auf die Beispiele einzuschränken.

Die in den nachfolgenden Beispielen durchgeführte Bestimmung der BET-Oberfläche erfolgte nach DIN 66 131. Die Schüttdichte wurde mit einer Apparatur gemäß DIN 53 466 ermittelt. Die Messwerte der Laserbeugung wurden an einem Malvem Mastersizer S, Ver. 2.18 erhalten.

### Bespiel 1: Vergleichsbeispiel (nicht erfindungsgemäß):

40 kg ungeregeltes, durch hydrolytische Polymerisation hergestelltes PA 12 hergestellt in Anlehnung an DE 35 10 691, Beispiel 1 mit einer relativen Lösungsviskosität ηᵣₑₗ. von 1.61 (in angesäuertem m-Kresol) und einem Endgruppengehalt von 72 mmol/kg COOH bzw. 68 mmol/kg NH2 werden mit 0,3 kg IRGANOX^{®} 1098 in 350 1 Ethanol, vergällt mit 2-Butanon und 1 % Wassergehalt, innerhalb von 5 Stunden in einem 0,8 m³-Rührkessel (D = 90 cm, h = 170 cm) auf 145 °C gebracht und unter Rühren (Blattrührer, d = 42 cm, Drehzahl = 91 Upm) 1 Stunde bei dieser Temperatur belassen. Anschließend wird die Manteltemperatur auf 120 °C reduziert und mit einer Kühlrate von 45 K/h bei der derselben Rührerdrehzahl die Innentemperatur auf 120 °C gebracht. Von jetzt an wird bei gleicher Kühlrate die Manteltemperatur 2 K - 3 K unter der Innentemperatur gehalten. Die Innentemperatur wird mit gleicher Kühlrate auf 117 °C gebracht und dann 60 Minuten konstant gehalten. Danach wird mit einer Kühlrate von 40 K/h die Innentemperatur auf 111 °C gebracht. Bei dieser Temperatur setzt die Fällung ein, erkennbar an der Wärmeentwicklung. Nach 25 Minuten fällt die Innentemperatur ab, was das Ende der Fällung anzeigt. Nach Abkühlen der Suspension auf 75 °C wird die Suspension in einen Schaufeltrockner überführt. Das Ethanol wird daraus bei laufendem Rührwerk bei 70 °C/400 mbar abdestilliert, und der Rückstand anschließend bei 20 mbar/ 85 °C 3 Stunden nachgetrocknet.

| | |
|---|---|
| BET: | 6,9 m²/g |
| Schüttdichte: | 429 g/l |

Laserbeugung: d(10 %): 42 µm, d(50 %): 69 µm, d(90 %): 91 µm

### Beispiel 2: Einarbeitung von Budit 3076 DCD durch Compoundierung und anschließende Vermahlung

40 kg geregeltes, durch hydrolytische Polymerisation hergestelltes PA 12, Typ Vestamid L1600 der Degussa AG, werden mit 0,3 kg IRGANOX ® 245 und 12 kg (30 Teile) Flammschutzmittel (Budit 3076 DCD, Budenheim Iberica) bei 220 °C in einer Zweiwellen-Compoundiermaschine (Bersttorf ZE25) extrudiert und als Strang granuliert. Das Granulat wird anschließend bei tiefen Temperaturen (-40 °C) in einer Prallmühle auf eine Korngrößenverteilung zwischen 0 und 120 µm vermahlen. Anschließend wurden 40 g Aerosil 200 (0,1 Teile) bei Raumtemperatur und 500 U/min 3 Minuten untergemischt.

### Beispiel 3: Einarbeitung von Budit 3076 DCD-2000 im Dry Blend

Zu 1900 g (65 Teile) Polyamid 12-Pulver, hergestellt gemäß DE 29 06 647, Beispiel 1 mit einem mittleren Korndurchmesser d₅₀ von 56 µm (Laserbeugung) und einer Schüttdichte gemäß DIN 53 466 von 459 g/l wird 1023 g (35 Teile) Budit 3076 DCD-2000 im Dry-Blend-Verfahren unter Benutzung eines Henschelmischers FML10/KM23 bei 700 U/min bei 50 °C in 3 Minuten gemischt. Anschließend wurden 1,5 g Aerosil R 812 (0,05 Teile) bei Raumtemperatur und 500 U/min in 3 Minuten untergemischt.

Unter den selben Bedingungen wurden weitere Pulver hergestellt, die 10, 20, 25, 30 und 35 Teile des Flammschutzmittels Budit 3076 DCD-2000 aufweisen.

### Beispiel 4: Einarbeitung von Budit 3076 DCD und Metallseife im Dry Blend

Zu 1900 g (70 Teile) Polyamid 12-Pulver, hergestellt gemäß DE 29 06 647, Beispiel 1 mit einem mittleren Korndurchmesser d₅₀ von 56 µm (Laserbeugung) und einer Schüttdichte gemäß DIN 53 466 von 459 g/l wird 814 g (30 Teile) Budit 3076 DCD im Dry-Blend-Verfahren unter Benutzung eines Henschelmischers FML10/KM23 bei 700 U/min bei 50 °C in 3 Minuten gemischt. Anschließend wurden 54 g (2 Teile) Licomont NaV und 2 g Aerosil 200 (0,1 Teile) bei Raumtemperatur und 500 U/min in 3 Minuten untergemischt.

### Beispiel 5: Einarbeitung von Exolit AP 422 im Dry Blend

Zu 1900 g (80 Teile) Polyamid 12-Pulver, hergestellt gemäß DE 29 06 647, Beispiel 1 mit einem mittleren Korndurchmesser d₅₀ von 56 µm (Laserbeugung) und einer Schüttdichte gemäß DIN 53 466 von 459 g/l wird 475 g (20 Teile) Exolit AP 422 im Dry-Blend-Verfahren unter Benutzung eines Henschelmischers FML10/KM23 bei 700 U/min bei 50°C in 3 Minuten gemischt. Anschließend wurden 2,4 g Aerosil 200 (0, 1 Teile) bei Raumtemperatur und 500 U/min in 3 Minuten untergemischt.

Unter den selben Bedingungen wurden weitere Pulver hergestellt, die 10, 25, 30 und 35 Teile des Flammschutzmittels Exolit AP 422 aufweisen.

### Weiterverarbeitung und Test

Die Pulver aus den Beispielen 1 bis 4 wurden auf einer Laser-Sinter-Maschine zu Stäben für den Brandschutztest gemäß UL94V sowie zu Mehrzweckstäben nach ISO 3167 verbaut. An letzteren Bauteilen wurden mechanische Werte mittels Zugversuch nach EN ISO 527 ermittelt (Tabelle 1). Die UL-Stäbe wurden für den vertikalen Brenntest nach UL94V (Underwriters Laboratories Inc.) verwendet. Die Stäbe haben die Sollabmessungen 3,2*10*80 mm. Die Herstellung erfolgte jeweils auf einer Laser-Sinter-Maschine EOSINT P360 der Firma EOS GmbH.

**Tabelle 1: Testergebnisse der Proben gemäß der Beispiele 1 bis 3**

| **Beispiele** | **Probestabdicke [mm]** | **E-Modul N/mm²** | **UL Gesamtbrennzeit [s]** | **UL Einstufung** |
|---|---|---|---|---|
| Formkörper aus Material aus Beispiel 1 | 3,9 | 1688 | >167 | k.E. |
| Formkörper aus Material aus Beispiel 2 | 3,6 | 1890 | 19 | V0 |
| Formkörper aus Material aus Beispiel 4 30 % Budit 3076 DCD-2000 | 3,6 | 1860 | 11 | V0 |
| Formkörper aus Material aus Beispiel 3 30 % Budit 3076 DCD-2000 | 3,6 | 1885 | 10 | V0 |
| Formkörper aus Material aus Beispiel 3 35 % Budit 3076 DCD-2000 | 3,6 | 2031 | 9 | V0 |
| Formkörper aus Material aus Beispiel 5 30 % Exolit AP 422 | 3,7 | 2313 | 10 | V0 |
| Formkörper aus Material aus Beispiel 5 20 % Exolit AP 422 | 3,7 | 2207 | 10 | V0 |

| | | | | |
|---|---|---|---|---|
| (k.E.: Eine Einstufung in eine der Stufen V0 bis V2 war nicht möglich. Die Stäbe sind dicker als die Sollstärke, was zum einen auf die z-Kompensation (der Laserstrahl erreicht mehr als eine Schichtdicke, da er ja auch die Schichtgrenze noch erreichen muss, was bei der ersten Schicht aber etwas zuviel ist) und zum anderen auf die leicht intumeszierenden (aufschäumenden) Wirkung einiger Flammschutzmittel zurückzuführen ist.) | | | | |

Es ist deutlich zu erkennen, dass durch die Zugabe von auf Ammoniumpolyphosphat basierendem Flammschutzmittel zum Polymerpulver Formkörper hergestellt werden können, die eine deutlich bessere Einstufung nach UL aufweisen. Durch die Zugabe des Flammschutzmittels wird außerdem eine Erhöhung des Elastizitätsmoduls und der Zugfestigkeit erzielt, wobei allerdings gleichzeitig die Reißdehnung verringert wird.

## Patentansprüche

1. Pulverförmige Zusammensetzung zur Verarbeitung in einem Verfahren zum schichtweisen Aufbau von dreidimensionalen Gegenständen, bei dem selektiv Teile des Pulvers miteinander verbunden werden,
**dadurch gekennzeichnet,**
**dass** das Pulver zumindest ein Polymer und zumindest ein Ammoniumpolyphosphat aufweisendes Flammschutzmittel und eine maximale Partikelgröße von ≤ 150 µm aufweist.

2. Pulver nach Anspruch 1,
**dadurch gekennzeichnet,**
**dass** das Polymere durch Vermahlen, Fällen, und/oder anionische Polymerisation oder einer Kombination daraus oder durch anschließende Fraktionierung hergestellt wurde.

3. Pulver nach Anspruch 1 oder 2,
**dadurch gekennzeichnet,**
**dass** das Polymer ein Homo- oder Copolymer ausgewählt aus Polyester, Polyvinylchlorid, Polyacetal, Polypropylen, Polyethylen, Polystyrol, Polycarbonat, Poly-(N-methylmethacrylimide) (PMMI), Polymethylmethacrylat (PMMA), Ionomer, Polyamid, Copolyester, Copolyamide, Terpolymere, Acrylnitril-Butadien-Styrol-Copolymere (ABS) oder Gemische davon ist.

4. Pulver nach zumindest einem der Ansprüche 1 bis 3,
**dadurch gekennzeichnet,**
**dass** das Pulver ein Polyamid 612, Polyamid 11 oder Polyamid 12 oder Copolyamide basierend auf den vorgenannten Polyamiden aufweist.

5. Pulver nach zumindest einem der Ansprüche 1 bis 4,
**dadurch gekennzeichnet,**
**dass** das Polymere eine Schmelztemperatur von 50 bis 350 °C aufweist.

6. Pulver nach Anspruch 5,
**dadurch gekennzeichnet,**
**dass** das Polymere eine Schmelztemperatur von 70 bis 200 °C aufweist.

7. Pulver nach zumindest einem der Ansprüche 1 bis 6,
**dadurch gekennzeichnet,**
**dass** das Pulver eine mittlere Partikelgröße von 20 bis 100 µm aufweist.

8. Pulver nach zumindest einem der Ansprüche 1 bis 7,
**dadurch gekennzeichnet,**
**dass** es zusätzlich zumindest einen Hilfsstoff und/oder zumindest einen Füllstoff und/oder zumindest ein Pigment aufweist.

9. Pulver nach Anspruch 8,
**dadurch gekennzeichnet,**
**dass** es als Hilfsstoff Rieselhilfsmittel aufweist.

10. Pulver nach einem der Ansprüche 1 bis 9,
**dadurch gekennzeichnet,**
**dass** das Ammoniumpolyphosphat von 10 bis 35 Massen-% Phosphor aufweist.

11. Pulver nach einem der Ansprüche 1 bis 10,
**dadurch gekennzeichnet,**
**dass** die Flammschutzkomponente neben dem Ammoniumpolyphosphat Synergisten aufweist.

12. Pulver nach einem der Ansprüche 1 bis 11,
**dadurch gekennzeichnet,**
**dass** das Pulver die Flammschutzkomponente pulverförmig mit einer mittleren Partikelgröße von 1 bis 50 µm aufweist.

13. Pulver nach einem der Ansprüche 1 bis 12,
**dadurch gekennzeichnet,**
**dass** die Flammschutzkomponente pulverförmig und gecoated vorliegt.

14. Sinterpulver nach einem der Ansprüche 1 bis 13,
**dadurch gekennzeichnet,**
**dass** das Pulver bezogen auf die Summe der im Pulver vorhandenen Polyamide von 0,01 bis 30 Gew.-% Metallseife aufweist.

15. Sinterpulver nach Anspruch 14,
**dadurch gekennzeichnet,**
**dass** das Pulver bezogen auf die Summe der im Pulver vorhandenen Polyamide von 0,5 bis 15 Gew.-% Metallseife aufweist.

16. Sinterpulver nach einem der Ansprüche 1 bis 14,
**dadurch gekennzeichnet,**
**dass** das Pulver eine Mischung von feinteiligen Metallseifenpartikeln und Polyamidpartikeln aufweist.

17. Sinterpulver nach einem der Ansprüche 1 bis 14,
**dadurch gekennzeichnet,**
**dass** das Pulver in Polyamidpartikeln eingearbeitete Metallseifen aufweist.

18. Sinterpulver nach zumindest einem der Ansprüche 1 bis 17,
**dadurch gekennzeichnet,**
**dass** die Metallseifen Alkali- oder Erdalkalisalze der zugrunde liegenden Alkanmonocarbonsäuren oder Dimersäuren sind.

19. Sinterpulver nach zumindest einem der Ansprüche 1 bis 18,
**dadurch gekennzeichnet,**
**dass** die Metallseifen Natrium- oder Calciumsalze der zugrunde liegenden Alkanmonocarbonsäuren oder Dimersäuren sind.

20. Verfahren zur Herstellung von Pulver gemäß zumindest einem der Ansprüche 1 bis 19,
**dadurch gekennzeichnet,**
**dass** zumindest ein Polymer mit einem Ammoniumpolyphosphat aufweisenden Flammschutzmittel vermischt wird.

21. Verfahren nach Anspruch 14,
**dadurch gekennzeichnet,**
**dass** durch Umfällung oder Vermahlung erhaltenes Polymerpulver im Dry Blend mit dem Ammoniumpolyphosphat aufweisenden Flammschutzmittel vermischt wird.

22. Verfahren nach Anspruch 14,
**dadurch gekennzeichnet,**
**dass** das Ammoniumpolyphosphat aufweisende Flammschutzmittel in eine Schmelze von Polymer eincompoundiert wird und das erhaltene Gemisch durch Vermahlung zu Pulver verarbeitet wird.

23. Verwendung von Pulvern gemäß zumindest einem der Ansprüche 1 bis 13 zur Herstellung von Formkörpern durch ein schichtweise arbeitendes, selektiv das Pulver verbindendes Verfahren.

24. Verwendung nach Anspruch 17,
**dadurch gekennzeichnet,**
**dass** die Herstellung von Formkörpern durch selektives Lasersintern, selektives Inhibieren des Verbindens von Pulvern, 3D-Drucken oder ein Mikrowellenverfahren erfolgt.

25. Formkörper, hergestellt durch ein Verfahren zum schichtweisen Aufbau von dreidimensionalen Gegenständen, bei dem selektiv Teile eines Pulvers miteinander verbunden werden,
**dadurch gekennzeichnet,**
**dass** es zumindest ein Ammoniumpolyphosphat aufweisendes Flammschutzmittel und zumindest ein Polymer aufweist.

26. Formkörper nach Anspruch 19,
**dadurch gekennzeichnet,**
**dass** er ein Polyamid aufweist, welches pro Carbonamid-Gruppe zumindest 8 Kohlenstoffatome aufweist.

27. Formkörper nach Anspruch 19 oder 20,
**dadurch gekennzeichnet,**
**dass** er Polyamid 612, Polyamid 11 und/oder Polyamid 12 oder Copolyamide, basierend auf diesen Polyamiden aufweist.

28. Formkörper nach einem der Ansprüche 19 bis 21,
**dadurch gekennzeichnet,**
**dass** er bezogen auf die Summe der vorhandenen Komponenten von 5 bis 50 Massen-% Ammoniumpolyphosphat aufweisendes Flammschutzmittel aufweist.

29. Formkörper nach Anspruch 22,
**dadurch gekennzeichnet,**
**dass** er bezogen auf die Summe der vorhandenen Polymere von 30 bis 35 Gew.-% Ammoniumpolyphosphat aufweisendes Flammschutzmittel aufweist.

30. Formkörper nach zumindest einem der Ansprüche 19 bis 23,
**dadurch gekennzeichnet,**
**dass** er Füllstoffe und/oder Pigmente aufweist.

31. Formkörper nach einem der vorhergehenden Ansprüche,
**dadurch gekennzeichnet,**
**dass** er bezogen auf die Summe der im Pulver vorhandenen Polyamide von 0,01 bis 30 Gew.-% Metallseife aufweist.

32. Formkörper nach einem der vorhergehenden Ansprüche,
**dadurch gekennzeichnet,**
**dass** er bezogen auf die Summe der im Pulver vorhandenen Polyamide von 0,5 bis 15 Gew.-% Metallseife aufweist.

33. Formkörper nach einem der vorhergehenden Ansprüche,
**dadurch gekennzeichnet,**
**dass** eine Mischung von feinteiligen Metallseifenpartikeln und Polyamidpartikeln aufweist.

34. Formkörper nach einem der vorhergehenden Ansprüche,
**dadurch gekennzeichnet,**
**dass** das Pulver in Polyamidpartikeln eingearbeitete Metallseifen aufweist.

35. Formkörper nach einem der vorhergehenden Ansprüche,
**dadurch gekennzeichnet,**
**dass** die Metallseifen Alkali- oder Erdalkalisalze der zugrunde liegenden Alkanmonocarbonsäuren oder Dimersäuren sind.

36. Formkörper nach einem der vorhergehenden Ansprüche,
**dadurch gekennzeichnet,**
**dass** die Metallseifen Natrium- oder Calciumsalze der zugrunde liegenden Alkanmonocarbonsäuren oder Dimersäuren sind.

## Claims

1. Pulverulent composition for processing in a process for the layer-by-layer build-up of three-dimensional objects by selectively bonding portions of the powder to one another,
**characterized in that**
the powder comprises at least one polymer and at least one flame retardant comprising ammonium polyphosphate and has a maximum particle size of ≤ 150 µm.

2. Powder according to Claim 1,
**characterized in that**
the polymer was prepared by milling, precipitation, and/or anionic polymerization, or by a combination of these, or by subsequent fractionation.

3. Powder according to Claim 1 or 2,
**characterized in that**
the polymer is a homo- or copolymer selected from polyester, polyvinyl chloride, polyacetal, polypropylene, polyethylene, polystyrene, polycarbonate, poly-(N-methylmethacrylimides) (PMMI), polymethyl methacrylate (PMMA), ionomer, polyamide, copolyester, copolyamides, terpolymers, acrylonitrile-butadiene-styrene copolymers (ABS), or is a mixture of these.

4. Powder according to at least one of Claims 1 to 3,
**characterized in that**
the powder comprises a nylon-6,12, nylon-11, or nylon-12, or copolyamides based on the aforementioned polyamides.

5. Powder according to at least one of Claims 1 to 4,
**characterized in that**
the polymer has a melting point of from 50 to 350°C.

6. Powder according to Claim 5,
**characterized in that**
the polymer has a melting point of from 70 to 200°C.

7. Powder according to at least one of Claims 1 to 6,
**characterized in that**
the powder has a median particle size of from 20 to 100 µm.

8. Powder according to at least one of Claims 1 to 7,
**characterized in that**
it also comprises at least one auxiliary and/or at least one filler, and/or at least one pigment.

9. Powder according to Claim 8,
**characterized in that**
it comprises flow aid as auxiliary.

10. Powder according to any of Claims 1 to 9,
**characterized in that**
the ammonium polyphosphate contains from 10 to 35% by weight of phosphorus.

11. Powder according to any of Claims 1 to 10,
**characterized in that**
the flame retardant component comprises synergists alongside the ammonium polyphosphate.

12. Powder according to any of Claims 1 to 11,
**characterized in that**
the powder comprises the flame retardant component in pulverulent form with a median particle size of from 1 to 50 µm.

13. Powder according to any of Claims 1 to 12,
**characterized in that**
the flame retardant component is in pulverulent and coated form.

14. Sinter powder according to any of Claims 1 to 13,
**characterized in that**
the powder comprises, based on the entirety of polyamides present in the powder, from 0.01 to 30% by weight of metal soap.

15. Sinter powder according to Claim 14,
**characterized in that**
the powder comprises, based on the entirety of polyamides present in the powder, from 0.5 to 15% by weight of metal soap.

16. Sinter powder according to any of Claims 1 to 14,
**characterized in that**
the powder comprises fine metal soap particles mixed with polyamide particles.

17. Sinter powder according to any of Claims 1 to 14,
**characterized in that**
the powder comprises metal soaps incorporated within polyamide particles.

18. Sinter powder according to at least one of Claims 1 to 17,
**characterized in that**
the metal soaps are the alkali metal or alkaline earth metal salts of the underlying alkanemonocarboxylic acids or dimer acids.

19. Sinter powder according to at least one of Claims 1 to 18,
**characterized in that**
the metal soaps are the sodium or calcium salts of the underlying alkanimonocarboxylic acids or dimers acids.

20. Process for preparing powder according to at least one of Claims 1 to 19,
**characterized in that**
at least one polymer with a flame retardant comprising ammonium polyphosphate is mixed.

21. Process according to Claim 14,
**characterized in that**
polymer powder obtained by reprecipitation or milling is mixed in a dry blend process with the flame retardant comprising ammonium polyphosphate.

22. Process according to Claim 14,
**characterized in that**
the flame retardant comprising ammonium polyphosphate is compounded into a melt of polymer, and the resultant mixture is processed by milling to give powder.

23. Use of powders according to at least one of Claims 1 to 13 for producing moldings by a layer-by-layer process which selectively bonds the powder.

24. Use according to Claim 17,
**characterized in that**
moldings are produced by selective laser sintering, selective inhibition of the bonding of powders, 3D printing, or a microwave process.

25. Molding, produced by a process for the layer-by-layer build-up of three-dimensional objects by selectively bonding portions of a powder to one another,
**characterized in that**
it comprises at least one flame retardant comprising ammonium polyphosphate and comprises at least one polymer.

26. Molding according to Claim 19,
**characterized in that**
it comprises a polyamide which contains at least 8 carbon atoms per carboxamide group.

27. Molding according to Claim 19 or 20,
**characterized in that**
it comprises nylon-6,12, nylon-11 and/or nylon-12, or copolyamides based on these polyamides.

28. Molding according to any of Claims 19 to 21,
**characterized in that**
based on the entirety of the components present, it comprises from 5 to 50% by weight of flame retardant comprising ammonium polyphosphate.

29. Molding according to Claim 22,
**characterized in that**,
based on the entirety of the polymers present, it comprises from 30 to 35% by weight of flame retardant comprising ammonium polyphosphate.

30. Molding according to at least one of Claims 19 to 23,
**characterized in that**
it comprises fillers and/or pigments.

31. Molding according to any of the preceding claims,
**characterized in that**,
based on the entirety of the polyamides present in the powder, it comprises from 0.01 to 30% by weight of metal soap.

32. Molding according to any of the preceding claims,
**characterized in that**,
based on the entirety of the polyamides present in the powder, it comprises from 0.5 to 15% by weight of metal soap.

33. Molding according to any of the preceding claims,
**characterized in that**
it comprises fine metal soap particles mixed with polyamide particles.

34. Molding according to any of the preceding claims,
**characterized in that**
the powder comprises metal soaps incorporated within polyamide particles.

35. Molding according to any of the preceding claims,
**characterized in that**
the metal soaps are the alkali metal or alkaline earth metal salts of the underlying alkanemonocarboxylic acids or dimer acids.

36. Molding according to any of the preceding claims,
**characterized in that**
the metal soaps are the sodium or calcium salts of the underlying alkanemonocarboxylic acids or dimer acids.

## Revendications

1. Composition pulvérulente destinée à être mise en oeuvre dans un procédé de construction couche par couche d'objets tridimensionnels, dans lequel des parties de la poudre sont liées sélectivement les unes aux autres,
**caractérisée en ce que** la poudre comprend au moins un polymère et au moins un agent ignifugeant contenant du polyphosphate d'ammonium et présente une taille de particules maximale ≤ 150 µm.

2. Poudre selon la revendication 1,
**caractérisée en ce que** le polymère a été préparé par broyage, précipitation et/ou polymérisation anionique, ou une combinaison de ceux-ci, ou par fractionnement subséquent.

3. Poudre selon la revendication 1 ou 2,
**caractérisée en ce que** le polymère est un homopolymère ou un copolymère choisi parmi un polyester, un polychlorure de vinyle, un polyacétal, un polypropylène, un polyéthylène, un polystyrène, un polycarbonate, des poly(N-méthylméthacrylimide) (PMMI), un polyméthacrylate de méthyle (PMMA), un ionomère, un polyamide, un copolyester, des copolyamides, des terpolymères, des copolymères acrylonitrile/butadiène/styrène (ABS) ou leurs mélanges.

4. Poudre selon au moins l'une des revendications 1 à 3,
**caractérisée en ce que** la poudre comprend un polyamide 612, un polyamide 11 ou un polyamide 12, ou des copolyamides à base des polyamides mentionnés précédemment.

5. Poudre selon au moins l'une des revendications 1 à 4,
**caractérisée en ce que** le polymère présente une température de fusion de 50 à 350°C.

6. Poudre selon la revendication 5,
**caractérisée en ce que** le polymère présente une température de fusion de 70 à 200°C.

7. Poudre selon au moins l'une des revendications 1 à 6,
**caractérisée en ce que** la poudre présente une taille de particules moyenne de 20 à 100 µm.

8. Poudre selon au moins l'une des revendications 1 à 7,
**caractérisée en ce qu'**elle comprend en outre au moins un auxiliaire et/ou au moins une charge et/ou au moins un pigment.

9. Poudre selon la revendication 8,
**caractérisée en ce qu'**elle comprend un auxiliaire d'écoulement en tant qu'auxiliaire.

10. Poudre selon l'une quelconque des revendications 1 à 9,
**caractérisée en ce que** le polyphosphate d'ammonium comprend de 10 à 35 % en masse de phosphore.

11. Poudre selon l'une quelconque des revendications 1 à 10,
**caractérisée en ce que** le composant ignifugeant comprend des synergistes en plus du polyphosphate d'ammonium.

12. Poudre selon l'une quelconque des revendications 1 à 11,
**caractérisée en ce que** la poudre comprend le composant ignifugeant sous une forme pulvérulente présentant une taille de particules moyenne de 1 à 50 µm.

13. Poudre selon l'une quelconque des revendications 1 à 12,
**caractérisée en ce que** le composant ignifugeant se présente sous une forme pulvérulente et est revêtu.

14. Poudre frittée selon l'une quelconque des revendications 1 à 13,
**caractérisée en ce que** la poudre comprend, par rapport à la somme des polyamides présents dans la poudre, de 0,01 à 30 % en poids d'un savon métallique.

15. Poudre frittée selon la revendication 14,
**caractérisée en ce que** la poudre comprend, par rapport à la somme des polyamides présents dans la poudre, de 0,5 à 15 % en poids d'un savon métallique.

16. Poudre frittée selon l'une quelconque des revendications 1 à 14,
**caractérisée en ce que** la poudre comprend un mélange de particules de savon métallique finement divisées et de particules de polyamide.

17. Poudre frittée selon l'une quelconque des revendications 1 à 14,
**caractérisée en ce que** la poudre comprend des savons métalliques incorporés dans des particules de polyamide.

18. Poudre frittée selon au moins l'une des revendications 1 à 17,
**caractérisée en ce que** les savons métalliques sont des sels de métaux alcalins ou de métaux alcalino-terreux des acides alcanemonocarboxyliques ou des acides dimères de base.

19. Poudre frittée selon au moins l'une des revendications 1 à 18,
**caractérisée en ce que** les savons métalliques sont des sels de sodium ou de calcium des acides alcanemonocarboxyliques ou des acides dimères de base.

20. Procédé de préparation d'une poudre selon au moins l'une des revendications 1 à 19,
**caractérisé en ce qu'**au moins un polymère est mélangé avec un agent ignifugeant comprenant du polyphosphate d'ammonium.

21. Procédé selon la revendication 14,
**caractérisé en ce qu'**une poudre polymère obtenue par reprécipitation ou broyage est mélangée par mélange à sec avec l'agent ignifugeant comprenant du polyphosphate d'ammonium.

22. Procédé selon la revendication 14,
**caractérisé en ce que** l'agent ignifugeant comprenant du polyphosphate d'ammonium est combiné dans une masse fondue de polymère et le mélange obtenu est transformé en une poudre par broyage.

23. Utilisation de poudres selon au moins l'une des revendications 1 à 13, pour la production de corps moulés par un procédé couche par couche, liant sélectivement la poudre.

24. Utilisation selon la revendication 17,
**caractérisée en ce que** la production de corps moulés est effectuée par frittage au laser sélectif, inhibition sélective de la liaison de poudres, impression en 3D ou un procédé à micro-ondes.

25. Corps moulé produit par un procédé de construction couche par couche d'objets tridimensionnels, dans lequel des parties d'une poudre sont liées sélectivement les unes aux autres,
**caractérisé en ce qu'**il comprend au moins un agent ignifugeant comprenant du polyphosphate d'ammonium et au moins un polymère.

26. Corps moulé selon la revendication 19,
**caractérisé en ce qu'**il comprend un polyamide qui renferme au moins 8 atomes de carbone par groupe carboxamide.

27. Corps moulé selon la revendication 19 ou 20,
**caractérisé en ce qu'**il comprend du polyamide 612, du polyamide 11 et/ou du polyamide 12, ou des copolyamides à base de ces polyamides.

28. Corps moulé selon l'une quelconque des revendications 19 à 21,
**caractérisé en ce qu'**il comprend de 5 à 50 % en masse d'un agent ignifugeant comprenant du polyphosphate d'ammonium, par rapport à la somme des composants présents.

29. Corps moulé selon la revendication 22,
**caractérisé en ce qu'**il comprend de 30 à 35 % en poids d'un agent ignifugeant comprenant du polyphosphate d'ammonium, par rapport à la somme des polymères présents.

30. Corps moulé selon au moins l'une des revendications 19 à 23,
**caractérisé en ce qu'**il comprend des charges et/ou des pigments.

31. Corps moulé selon l'une quelconque des revendications précédentes,
**caractérisé en ce qu'**il comprend de 0,01 à 30 % en poids d'un savon métallique, par rapport à la somme des polyamides présents dans la poudre.

32. Corps moulé selon l'une quelconque des revendications précédentes,
**caractérisé en ce qu'**il comprend de 0,5 à 15 % en poids d'un savon métallique, par rapport à la somme des polyamides présents dans la poudre.

33. Corps moulé selon l'une quelconque des revendications précédentes,
**caractérisé en ce qu'**il comprend un mélange de particules de savon métallique finement divisées et de particules de polyamide.

34. Corps moulé selon l'une quelconque des revendications précédentes,
**caractérisé en ce que** la poudre comprend des savons métalliques incorporés dans des particules de polyamide.

35. Corps moulé selon l'une quelconque des revendications précédentes,
**caractérisé en ce que** les savons métalliques sont des sels de métaux alcalins ou de métaux alcalino-terreux des acides alcanemonocarboxyliques ou des acides dimères de base.

36. Corps moulé selon l'une quelconque des revendications précédentes,
**caractérisé en ce que** les savons métalliques sont des sels de sodium ou de calcium des acides alcanemonocarboxyliques ou des acides dimères de base.
